# EUROPEAN PATENT APPLICATION

(11) **EP 3 868 498 A1**
(43) Date of publication of application: **25.08.2021**
(21) Application number: 21157943.8
(22) Date of filing: 18.02.2021
(51) Int. Cl.: B22F 10/18, B22F 10/38, B29C 64/118, B33Y 10/00, B33Y 30/00, B33Y 80/00

(54) **SYSTEMS AND METHODS FOR ADDITIVELY MANUFACTURING LEAK RESISTANT OBJECTS**

(30) Priority: 18.02.2020 US 202062978216 P; 16.02.2021 US 202117176940
(71) Applicant: Markforged, Inc., Watertown, MA 02472 (US)
(72) Inventor: Hoffman, Christopher, Watertown, MA 02472 (US); Wilson, Bennett McClelland, Jamaica Plain, MA 02130 (US); MacMullen, Angus, Cambridge, MA 02138 (US); Lu, Yongquan, Cambridge, MA 02140 (US); Walsh, Corey Hazeltine, Boston, MA 02134 (US); Rodrigues, Vinay Francis, Watertown, MA 02472 (US)
(74) Representative: Slingsby Partners LLP

(57) **Abstract**

Systems and methods of additively manufacturing leak resistant objects are disclosed. Provided herein are methods of forming objects having walls and/or surfaces that are resistant to leaks. Objects disclosed are formed from or manufactured from compositions, including metals, polymers, and combinations thereof. Objects provided herein are made from methods of forming individual shells, forming of series shells, and layer-by-layer forming of objects. Further disclosed are methods of interconnecting shells, layers, and processes for transitioning therebetween the shells and layers.

## Description

### CROSS-REFERENCE TO RELATED APPLICATIONS

This application claims priority under 35 U.S.C. § 119(e) to U.S. Provisional Application Serial No. 62/978,216, titled "Systems and Methods for Additively Manufacturing Leak Resistant Objects" filed February 18, 2020.

### BACKGROUND

Additive manufacturing refers to any one of various manufacturing technologies that three-dimensionally builds objects in an additive fashion, for example, in a layer-by-layer manner.

### SUMMARY

The present disclosure generally relates to additive manufacturing, including systems, apparatuses, and methods for performing additive manufacturing. More particularly, and without limitation, the disclosed embodiments relate to, among other things, systems and methods for performing additive manufacturing for forming objects that may be resistant to leaks, for example leak proof or leak tight objects.

In some embodiments, the present disclosure includes methods of additively manufacturing an object. In some aspects, disclosed objects include a wall. Walls as disclosed herein can be used or useful to provide resistance to leaks. Such walls prevent fluid, for example, liquids and gases, from transporting through or across a boundary and/or perimeter defined therein. As such, these walls and the objects that contain them are characterized as fluid tight and/or gas tight.

In some aspects, methods of forming an object include additively manufacturing the object layer-by-layer. In some aspects, when designed and configured to be leak tight, leak resistant, or leak proof, the object may include a wall that is formed in a layer-by-layer manner. A wall may include one or more layers, that may be designed and built with the object and/or as part of the object. The wall may include a plurality of layers, that may be built with the object in a layer-by-layer manner.

A composition of the object, including the wall can be formed by depositing, extruding, or printing via an additive manufacturing apparatus, such as a three-dimensional printer. In some embodiments, the present disclosure includes forming a first or base layer of beads, lines, or shells via the depositing, extruding, or printing. The present disclosure further includes layer-by-layer forming of additional layers of the deposited beads, lines, or shells to form the wall of the object.

As is generally known, after a horizontal or x-y axis layer is completed by the three-dimensional printing apparatus, the printer may deflect, move, shift, or translate in the vertical or z axis before another layer is printed. In some aspects, the one or more beads, lines, or shells of a prior layer may be repeated on the next layer.

In some aspects, forming a wall can include continuously depositing a composition along a contour. In some aspects, forming a wall can include substantially continuously depositing a composition along a contour. A contour can include an adjacent path, a boundary, an outline, a shape, a trace, etc. A contour may be formed of a partial shape of an object. A contour may be formed of a portion of an object. A contour may be formed of a boundary of an object, for example the entire object.

In some aspects, forming a wall can include substantially continuously depositing a first layer, i.e., base layer, i.e., a layer printed to a build platen. The base layer can include a deposited, extruded, or printed bead, line, or shell. The deposited, extruded, or printed bead, line, or shell may be continuous or substantially continuous such that there are no breaks. The deposited, extruded, or printed bead, line, or shell may be continuous or substantially continuous such that it is uniform. The deposited, extruded, or printed bead, line, or shell may be continuous or substantially continuous such that the deposited material has uniform thickness throughout. The deposited, extruded, or printed bead, line, or shell may be continuous or substantially continuous such that the deposited material has uniform density throughout. The deposited, extruded, or printed bead, line, or shell may be continuous or substantially continuous such that the deposited material has uniform material properties throughout. The uniform material properties of the deposited material can include brittleness, ductility, elasticity, elongation at break, hardness, malleability, plasticity, toughness, or stiffness.

In some aspects, the continuous or substantially continuous deposited, extruded, or printed bead, line, or shell may be a first bead, line, or shell. The first shell may also be a first shell of one or more shells. That is, there may be one or more subsequent beads, one or more subsequent lines, or one or more subsequent shells. There may be a series or plurality of beads, lines, or shells.

Subsequent beads, lines, or shells may be neighboring to the first. That is, a subsequent bead, line, or shell that is deposited, extruded or printed on the layer according to the contour may be aligned near, with, or next to the first one. In some aspects, when forming the subsequent shells, each subsequent shell approximately follows an adjacent contour of each prior bead, line or shell. In some aspects, when depositing, extruding, or printing a plurality of beads, lines or shells on a layer, the one or more subsequent beads, lines, or shells may be printed exactly tracing the first bead, line, or shell alongside the first bead, line or shell. In some aspects, when depositing, extruding, or printing a plurality of beads, lines or shells on a layer, the one or more subsequent beads, lines, or shells may be printed substantially tracing a portion of the first bead, line, or shell alongside the first bead, line or shell. In some aspects, when depositing, extruding, or printing a plurality of beads, lines or shells on a layer the one or more subsequent beads, lines, or shells may be printed nearly or substantially tracing the first bead, line, or shell alongside the first bead, line or shell. In some aspects, neighboring beads, lines, or shells may be bordering beads, lines, or shells. In some aspects, neighboring beads, lines, or shells may be outlining beads, lines, or shells. In some aspects, neighboring beads, lines, or shells may be substantially adjacent beads, lines, or shells.

In some aspects, after a bead, line, shell is formed (e.g., an inner or first) and before another bead, line, or shell is formed (e.g., a second or outer), a transition may be formed therebetween the beads, lines, or shells. In some aspects, a transition is continuously or substantially continuously deposited. As above explained, a continuous or substantially continuous bead, line, or shell is one that is unbroken or uniform. An unbroken connection may be formed by one of these transitions between each of the deposited beads, lines, or shells. Transitional beads, lines, or shells may be continuous or substantially continuous such that the deposited material is of a uniform thickness and/or uniform density throughout. The deposited, extruded, or printed transitional bead, line, or shell may be continuous or substantially continuous such that the deposited material is having uniform material properties throughout, including, for example, brittleness, ductility, elasticity, elongation at break, hardness, malleability, plasticity, toughness, or stiffness.

In some aspects, transitioning from a first (or inner) bead, line, or shell to a second (or outer) bead, line or shell includes overlapping a portion of the contour of the first or inner bead, line, or shell. An overlap effectively seals a seam formed by the transition of the first layer. In some aspects, when forming a series of transitions between a plurality of contours, they may be designed and configured to regularly or periodically overlap so that transitions between beads, lines, shells do not form a seam. The misalignment of these transitions and/or the offsetting of the seams increases resistance to fluid flow. The misalignment of these transitions and/or the offsetting of the seams increases fluid tightness. In some aspects, unless corrected, the overlap can cause a starting point for each layer to continually shift or offset.

In some aspects, the transition between substantially continuous beads, lines, or shells may be an angled transition. That is, the shape of the transition between the two neighboring beads, lines, or shells may be angled. For example, if the printer were depositing or extruding a bead, line, or shell along a contour, and then to form the transition, the contour would deviate at an angle and form the transition, and then return to an adjacent or neighboring path to that of the first contour to form the subsequent bead, line or shell.

An angled transition can include for example a right angle. That is, if the printer were depositing or extruding along a contour, and then to form the transition, the contour would deviate at an angle of 90°. An angled transition can also include, for example, an angle that is less than 90°. That is, if the printer were depositing or extruding along a contour, and then to form the transition, the contour would deviate at an angle of less than about 90°.

In some aspects, the transition between substantially continuous beads, lines, or shells may be a transition having an increased volume of material. When deposited with additional volume of material, the additional volume can include for example, about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, about 25%, about 30%, about 40%, or about 50%.

In some aspects, the transition between substantially continuous beads, lines, or shells may be a transition being over-extruded. When over-extruded can include for example about 1x, about 2x, about 3x, about 4x, about 5x, about 6x about 7x, about 8x, about 9x, about 10x, about 15x, about 20x, about 25x, about 30x, about 40x, or about 50x.

In some aspects, the transition between substantially continuous beads, lines, or shells may be a transition being compressed, such that the bead, line, or shell takes up additional area. In some aspects, a compressed or compacted extrusion bead, line or shell is pressed against a surface or prior deposition and flattened or spread out.

In some aspects, a transition having an increased and/or over-extruded volume and/or wider area creates a constricted or constrained path. A constricted or constrained path may make it far more difficult for fluid to pass. A constricted or constrained path may make for a far more convoluted path for fluid to pass. In some aspects, a substantially continuously depositing may have additional volume or be over-extruded throughout the deposition for each bead, line, shell of each layer.

In some aspects, shells of a layer may be substantially connected through a substantially continuous bead, line, or shell. In some aspects, a wall can include, for example, a single elongated spiral.

Walls as disclosed herein can include a single perimeter, a dual perimeter, or multiple (i.e., a plurality of) perimeters. The walls having a one or more perimeters as disclosed here are designed and configured to provide leak resistance. Walls having multiple perimeters can provide multiple layers of fluid resistance and/or a continuing increasing path of resistance.

In some aspects, forming a multi-perimeter wall includes prior to forming any additional layers, staggering the contour from a first (e.g., inner) perimeter location to a second (e.g., outer) perimeter location. That is, before moving to add any layers in the z axis, staggering to a second location and depositing a second contour of beads, lines, or shells, including one or more beads, lines, or shells. In some aspects, staggering includes continuously depositing material. In some aspects, staggering includes a move in which material is not extruded.

In some aspects, when staggering from a first perimeter to a second perimeter includes offsetting the staggered contour. Thus, when staggering from the first perimeter to the second perimeter, a portion of the contour of the overlaps. The contour overlaps so that a seam created by the one or more transitions on a first perimeter are not aligned with those of a second perimeter. An overlap can effectively seal a seam formed by the stagger, for example, specifically when there may be minimal infill. The misalignment of these transitions and/or the offsetting of the seams increases resistance to fluid flow. The misalignment of these transitions and/or the offsetting of the seams increases fluid tightness.

In some aspects, forming an object includes forming an infill between the perimeters of the walls of the object. In some aspects, forming an object includes depositing, extruding, or printing an infill between the perimeters of the walls of the object. The infill may be the same material as the beads, lines, or shell material. The infill may be a honeycomb infill.

In some embodiments, the present disclosure includes layer-by-layer forming additional layers of the deposited one or more beads, lines, or shells to form the wall of the object. After the horizontal, x-y layer direction, the printer deflects, moves, shifts, or translates in the vertical, z layer direction before another layer is set to be printed. In some aspects, forming additional layers includes depositing, extruding, or printing layer-by-layer on the x-y along any of the multiple perimeters. In some aspects, the one or more beads, lines, or shells of a prior layer may be repeated on the next layer, i.e., the next vertical or z height layer, forming additional layers of the wall to form the multi-perimeter wall of the object.

In some embodiments, methods include layer-by-layer forming additional layers where each additional layer comprises a different number of shells from the immediate prior layer. In some aspects, changing a number of shells between layers can be useful to isolate an infill defect located adjacent to a shell in prior formed layers or subsequently formed layers. Sealing an infill defect may increase leak resistance and/or leak tightness. In some aspects, alternating or periodically alternating the number of shells between layers can be useful to isolate an infill defect located adjacent to a shell in prior formed layers or subsequently formed layers. The number of shells between a layer and the immediate prior layer may periodically alternate. The number of shells for every other layer may periodically alternate. The number of shells for every third layer may periodically alternate. The number of shells for every fourth layer may periodically alternate. The number of shells for every fifth layer may periodically alternate.

In some aspects, sealing can include filling gaps between beads, lines, or shells. For example, sealing can include filling in exposed corners and/or edges that may form or exist when printing layers on top of one another and/or printing beads, lines, or shells next to one another. In some aspects, sealing includes aligning beads, lines and shells above and between prior deposited beads, lines, or shells such that any gap or space between prior layers is filled. In some aspects, extra material can be printed to fill in a gap. In some aspects, when layer-by-layer forming additional layers, centrally aligning a bead, line or shell above a transition therebetween shells of an immediate prior layer. An additional layer may include substantially continuously depositing the composition along the centrally aligned path. In some aspects, methods include depositing a transition therebetween shells of an immediate prior layer and increasing a volume of layer extrusion, thereby forming an over-extruded layer. In some aspects, methods include depositing a transition therebetween shells of an immediate prior layer and increasing a volume of layer extrusion, thereby forming an over-extruded layer; and layer-by-layer forming additional layers by periodically alternating a number of shells between the base layer number; and the base layer plus two shells; and depositing with an over-extruded layer. In some aspects, walls as provided herein may include one or more of the above, for example, substantially continuous, over-extruded contours, angled transitions, increased volume at transitions, and/or alternating number of shells, etc. In some aspects, walls as provided herein can include all of the above.

In some aspects, the object and/or its walls may be resistant to a fluid flow. In some aspects, the object and/or its walls may be resistant to a fluid flow, such that the object is characterized as fluid tight, fluid proof, or fluid resistant. In some aspects, when exposed to a pressure, the object, and specifically the fluid tight wall, holds pressure. In some aspects, when exposed to a gas pressure, the object, and specifically the fluid tight wall, is configured to hold pressure. In some aspects, when exposed to a gas pressure, the object, and specifically the fluid tight wall, is configured to be resistant to leaks. In some aspects, when exposed to a gas pressure, such as a pressure range between about 20 psi and about 80 psi, the object, and specifically the fluid tight wall, is configured to hold pressure.

In accordance with an aspect, there are provided methods for additively manufacturing an object having a wall. The method may include forming a base layer of the wall. Forming a base layer of the wall may include substantially continuously depositing a composition along a contour to form a shell of one or more shells, forming subsequent shells of the one or more shells from the substantially continuously deposited composition along neighboring paths to the contour, and, prior to the step of forming the subsequent shells, between each shell of the subsequent shells of the one or more shells, substantially continuously depositing a transition therebetween. The method further may include layer-by-layer forming additional layers to form the wall of the object.

In some aspects, the method further may include forming a multi-perimeter wall. Forming a multi-perimeter wall may include, prior to forming additional layers, staggering the contour from a first perimeter location to a second perimeter location. Forming a multi-perimeter wall further may include forming the layer of the wall at the second perimeter location. Forming a multi-perimeter wall additionally may include layer-by-layer forming additional layers of the wall to form the multi-perimeter wall of the object.

In further aspects, the method may include offsetting the staggered contour such that each subsequent layer of the additional layers overlaps the transitions therebetween the shells of the one or more shells.

In further aspects, the method may include forming an infill between the perimeters of the walls of the object.

In some aspects, the step of substantially continuously depositing a transition therebetween may include forming an unbroken connection between each shell of the one or more shells. In further aspects, the step of substantially continuously depositing a transition therebetween may include angling the transition. Angling the transition may include, for example, deviating from a trajectory of a toolpath at an angle of about less than about 90°.

In further aspects, the step of substantially continuously depositing a transition therebetween, may include increasing a volume of the deposit at the transition. In particular aspects, increasing may include at least a 5% increase or at least a 10% increase. In certain aspects, increasing may include a 5x increase or may include a 10x increase.

In some aspects, the step of layer-by-layer forming additional layers may include, for each layer, forming a different number of shells from the immediate prior layer. In some aspects, the step of layer-by-layer forming additional layers may include periodically alternating a number of shells for each layer. In some aspects, the step of layer-by-layer forming additional layers comprises, periodically alternating a same number of shells for every two layers. In some aspects, the step of layer-by-layer forming additional layers comprises, periodically alternating a same number of shells for every three layers. In some aspects, the step of layer-by-layer forming additional layers comprises, periodically alternating a same number of shells for every four layers. In some aspects, the step of layer-by-layer forming additional layers comprises, periodically alternating a same number of shells for every five layers.

In some aspects, the step of periodically alternating isolates an infill defect located adjacent to a shell in prior formed layers or subsequently formed layers.

In some aspects, the wall may be characterized by its resistant to fluid flow.

In some aspects, when the object is pressurized with a gas, the wall may hold pressure. For example, the wall may hold pressure in a pressure range between about 20 pounds per square inch (psi) and about 80 psi. In some aspects, when the object is pressurized with a gas, the wall may be resistant to leaks.

In some aspects, the step of layer-by-layer forming additional layers may include, prior to the step of substantially continuously depositing the composition, centrally aligning a shell above a transition therebetween shells of an immediate prior layer. In some aspects, the step of layer-by-layer forming additional layers may include, prior to the step of substantially continuously depositing the composition, centrally aligning a shell above a transition therebetween shells of an immediate prior layer, and increasing a volume of layer extrusion, thereby forming an over-extruded layer. In some aspects, the step of layer-by-layer forming additional layers comprises, periodically alternating between the base layer and the over-extruded layer.

In some aspects, the step of substantially continuously depositing the composition for at least one shell of the one or more shells, comprises over extruding deposition for each shell layer.

In some aspects, in the step of forming subsequent shells, each subsequent shell may approximately follow an adjacent contour of each prior shell. For example, the step of forming each subsequent shell may include deviating from the contour to form the transition. In some aspect, the step of deviating may include diverging from the prior toolpath. In some aspects, the step of deviating may include diverging from the prior toolpath at an angle of less than 90°.

In some aspects, the step of forming subsequent shells of the one or more shells may include after the step of deviating, aligning the neighboring path to the contour adjacent to the prior contour; and tracing the prior contour.

In further aspect, the method may include overlapping a portion of the contour of each shell of the one or more shells such that the transition therebetween and the subsequent shells of the one or more shells are offset relative to those of a prior shell.

In some aspects, the step of forming the infill may include depositing infill. In some aspects, the step of forming the infill may include extruding infill. In certain aspects, the infill may be a same material as a shell material. In particular aspects, the step of forming the infill may include depositing a honeycomb infill.

In some embodiments, a metal material for forming a wall, shell, layer, infill, or other feature may include aluminum, copper, steel, stainless steel, titanium, alloys of any metal thereof, amorphous metal, glassy metal, or metallic glass. In particular embodiments, metals may include, but is not limited to, copper, tool steels, e.g., H13, A2, and D2, stainless steels, e.g., 17-4PH, metal alloys, e.g., INCONEL® 625, among other metals.

These and other capabilities of the disclosure, along with the disclosure itself, will be more fully understood after a review of the following figures, detailed description, and claims.

### BRIEF DESCRIPTION OF THE DRAWINGS

Various aspects of one or more embodiments are discussed below with reference to the accompanying figures, which are not intended to be drawn to scale. The figures are included to provide an illustration and a further understanding of the various aspects and embodiments. The figures are incorporated in and constitute a part of this specification. But, the figures are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:

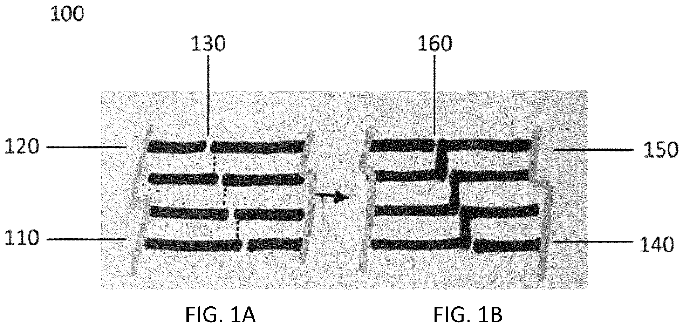

FIGS. 1-3 are schematic representations illustrating a portion of a layer a wall of an object. The schematic representation, for example, is oriented such that the layer is viewable (from the z-axis) on the print bed from above.
FIGS. 1A-1B are schematic representations illustrating a layer of an object. The schematic representation shows a series of shells at a perimeter and specifically at a transition location for the series of shells. FIG. 1A illustrates staggering from an inner shell (bottom) to an outer shell (top). FIG. 1B illustrates substantially continuously depositing a transition.

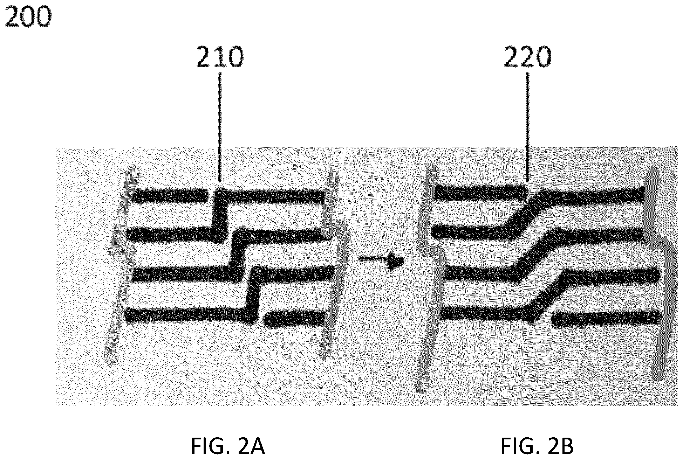

FIGS. 2A-2B are schematic representations illustrating a layer of an object. The schematic representation shows a series of shells at a perimeter and specifically at a transition location for the series of shells. FIG. 2A illustrates substantially continuously depositing a transition by deviating from a toolpath including diverging at an angle of about 90°. FIG. 2B illustrates substantially continuously depositing a transition by deviating from a toolpath including diverging at an angle of less than about 90°.

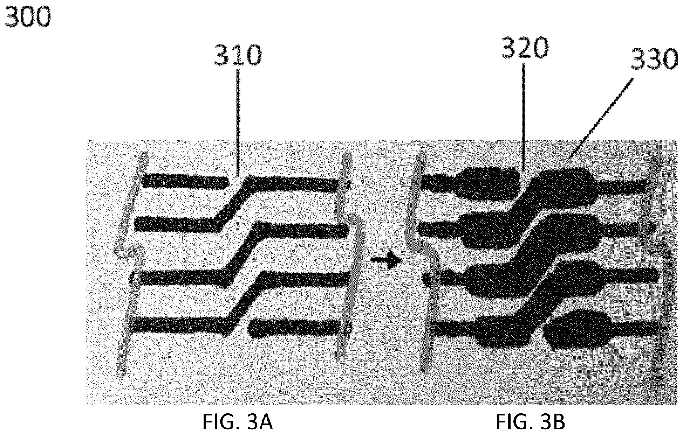

FIGS. 3A-3B are schematic representations illustrating a layer of an object. The schematic representation shows a series of shells at a perimeter and specifically at a transition location for the series of shells. FIG. 3A illustrates substantially continuously depositing a transition by deviating from a toolpath including diverging at an angle of less than about 90°. FIG. 3B illustrates substantially continuously depositing by an increased extrusion deviating from a toolpath including diverging at an angle of less than about 90°.

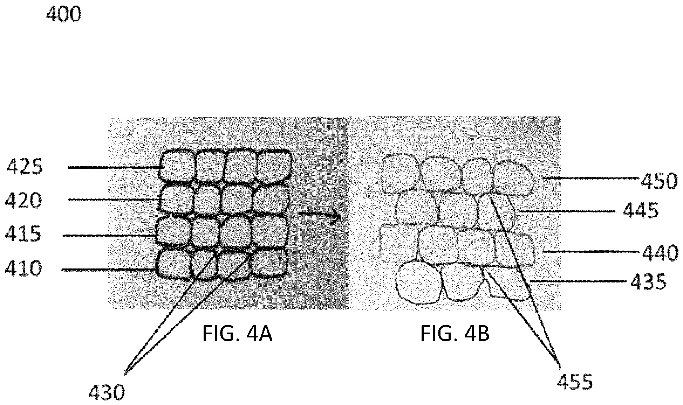

FIGS. 4A-4B are schematic representations illustrating a portion of a wall (single perimeter) of an object. FIG. 4A illustrates substantially continuously depositing each shell about centrally above (e.g., along the z-axis, i.e., vertically) a shell of a prior layer and the shells being formed of approximately a same compression as that of the shell of the prior layer. FIG. 4B illustrates substantially continuously depositing each shell at a location approximately centrally above (e.g., along the z-axis, i.e., vertically) a boundary between shells of a prior layer.

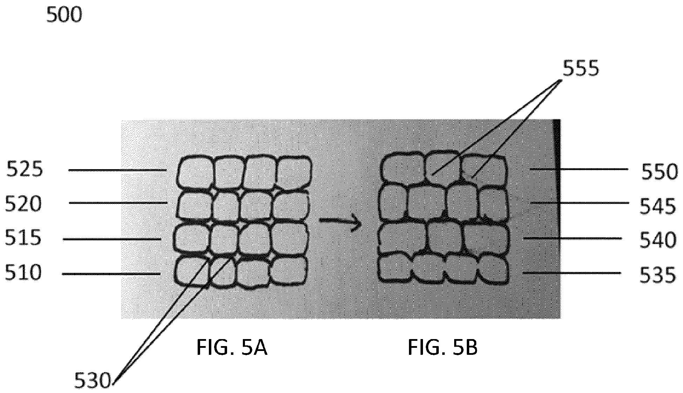

FIGS. 5A-5B are schematic representations illustrating a portion of a wall (single perimeter) of an object. FIG. 5A illustrates substantially continuously depositing each shell about centrally above (e.g., along the z-axis, i.e., vertically) a shell of a prior layer and the shell being under approximately same compression as that of the shell of the prior layer. FIG. 5B illustrates substantially continuously depositing each shell at a location approximately centrally above (e.g., along the z-axis, i.e., vertically) a boundary between shells of a prior layer. FIG. 5B further illustrates shells under approximately same compression as that of the shell of the prior layer. FIG. 5B additionally illustrates increased compression and extrusion such that the width of the shell is varied.

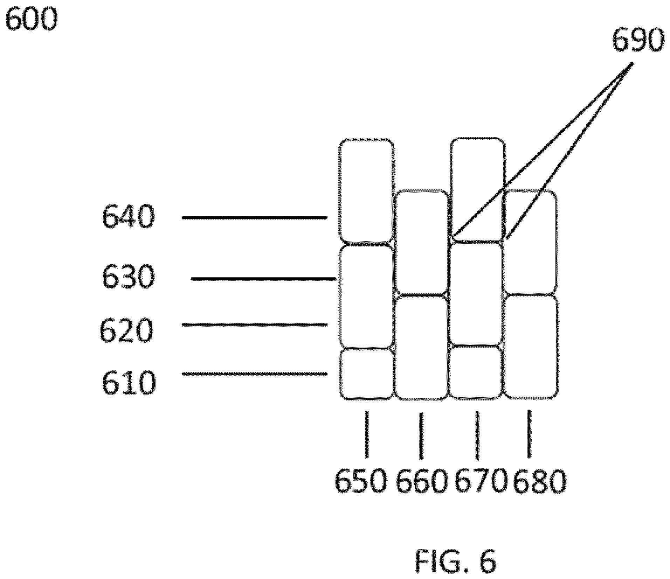

FIG. 6 is a schematic representation illustrating a portion of a wall (e.g., a single perimeter) of an object. FIG. 6 illustrates depositing a shell about centrally above (e.g., along the z-axis, i.e., vertically) a shell of a prior layer and the shell being under approximately the same compression and extrusion as that of the shell of the prior layer. FIG. 6 further illustrates double height shells for alternating between printed shells.

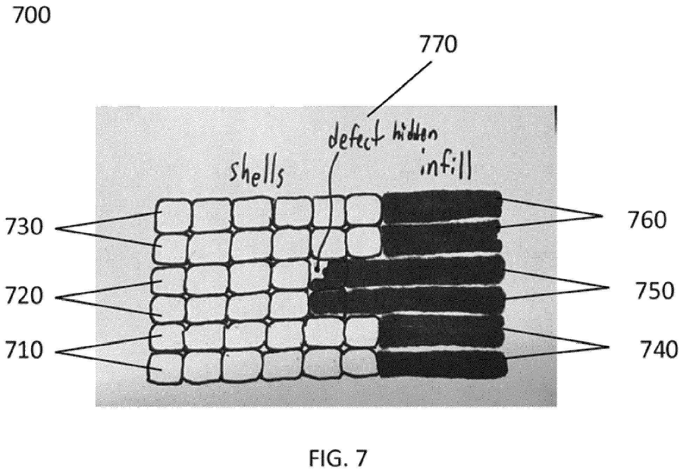

FIG. 7 is a schematic representation illustrating a portion of a wall (e.g., single perimeter) of an object. The illustrated portion shows infill material extending from the shells. The illustrated portion further shows a periodic variation in the number of shells per layer (e.g., 6-6-4-4-6-6). The illustrated portion highlights an infill defect that can occur at an interface between shells and infill. This schematic representation illustrates periodically varying the number of shells per layer to avoid consistent alignment of infill-shell interfaces, thereby isolating the shell-infill defect.

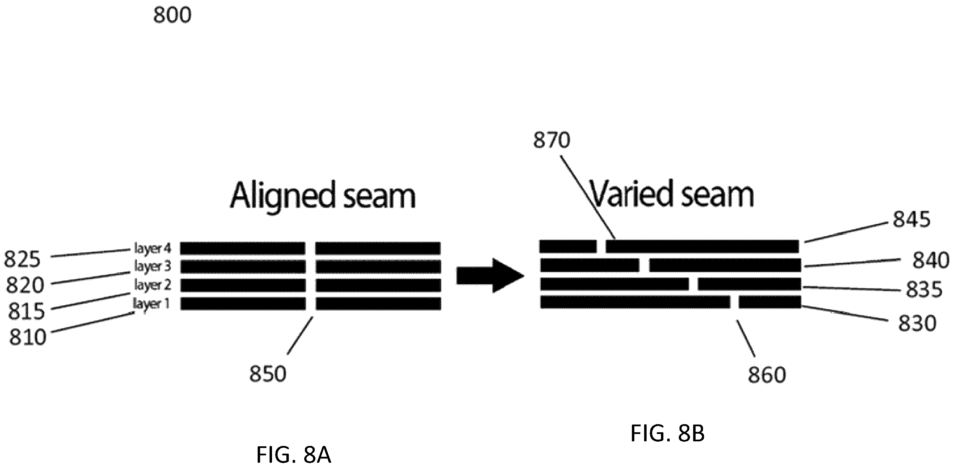

FIGS. 8A-8B are a schematic representation illustrating a portion of a wall (e.g., single perimeter) of an object. FIG. 8A illustrates substantially continuously depositing each shell with a transition between shells. FIG. 8A further illustrates these transitions being substantially aligned above each other (e.g., along the z-axis, i.e., vertically) through the wall, thereby forming an aligned seam. FIG. 8B illustrates substantially continuously depositing each shell with a transition between shells. FIG. 8B further illustrates these transitions being vertically offset having an overlap relative to one another above/below (e.g., along the z-axis, i.e., vertically) through the wall, thereby forming a varied seam.

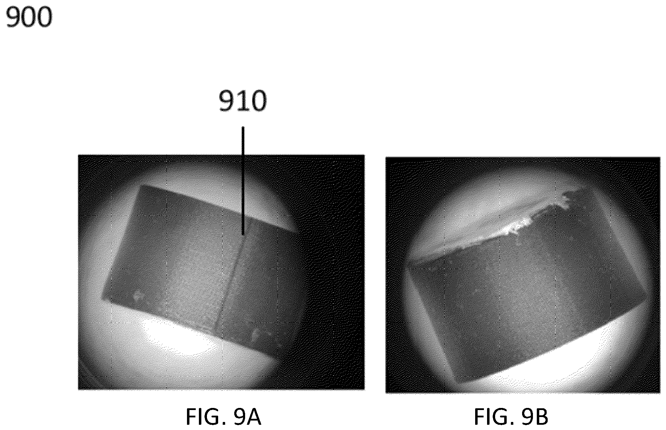

FIGS. 9A-9B are a schematic representation illustrating outside surfaces of a portion of a wall of an object. FIG. 9A shows the outside surface of the wall when fabricated using a process forming an aligned seam. FIG. 9B shows the outside surface of the wall when fabricated using a process forming a varied seam.

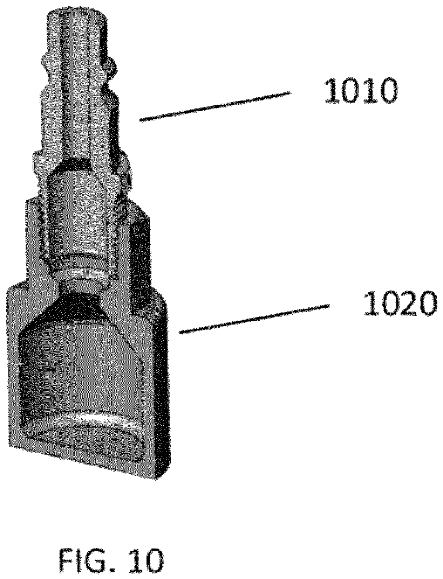

FIG. 10 is a schematic representation illustrating a printable fixture for testing leak resistance.

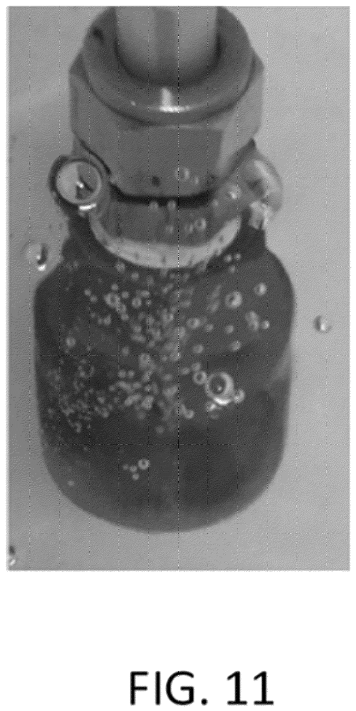

FIG. 11 is a schematic representation showing a leak test.

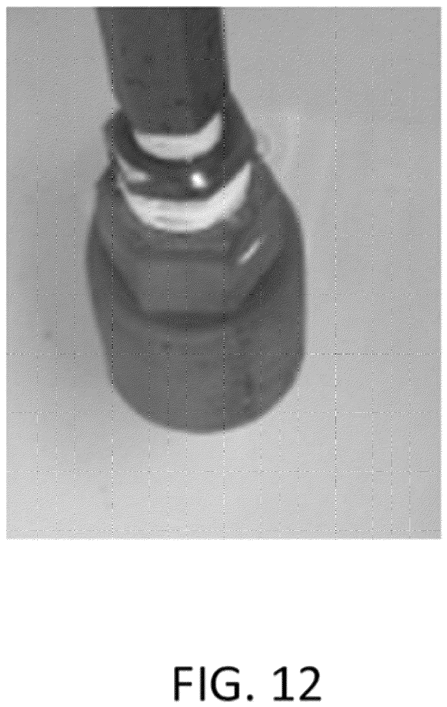

FIG. 12 is a schematic representation showing a leak test, according to some embodiments of the present disclosure.

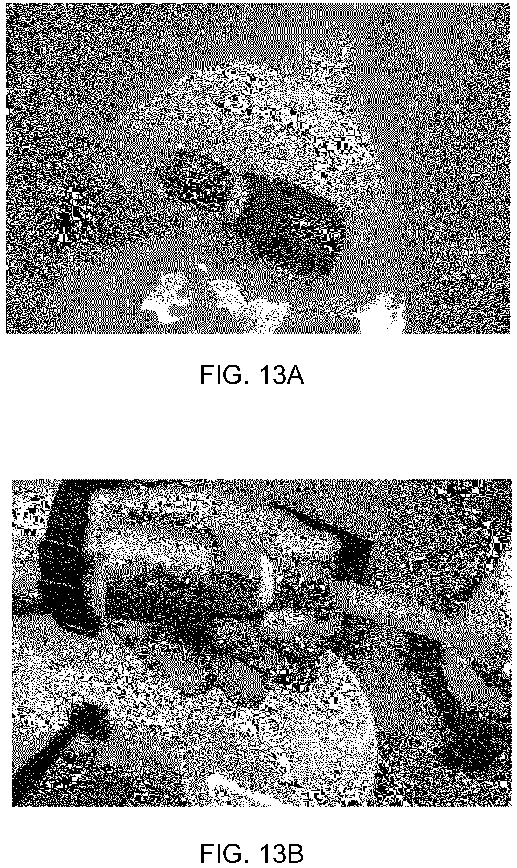

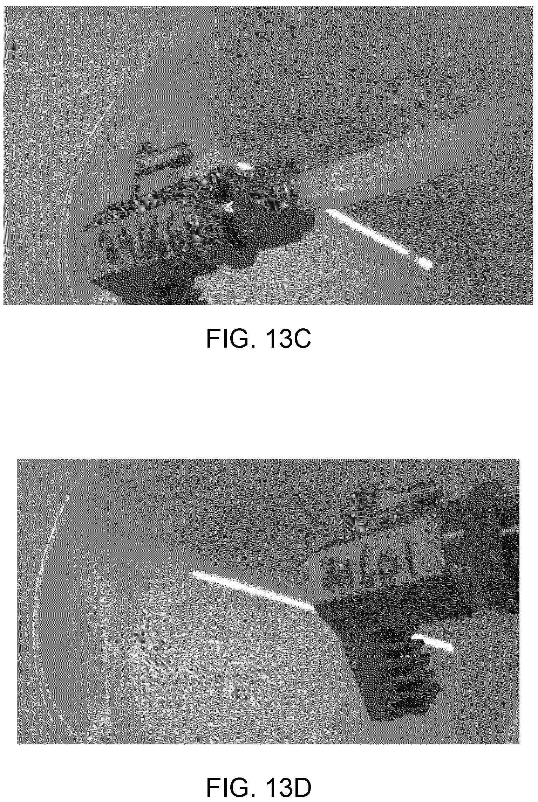

FIGS. 13A-13D illustrate parts printed from 17-4PH stainless steel and tested for leaks according to some embodiments of the present disclosure. FIGS. 13A and 13B are 17-4PH stainless steel parts of the same geometry. FIGS. 13C and 13D are 17-4PH stainless steel parts of the same geometry and different from those illustrated in FIGS. 13A and 13B.

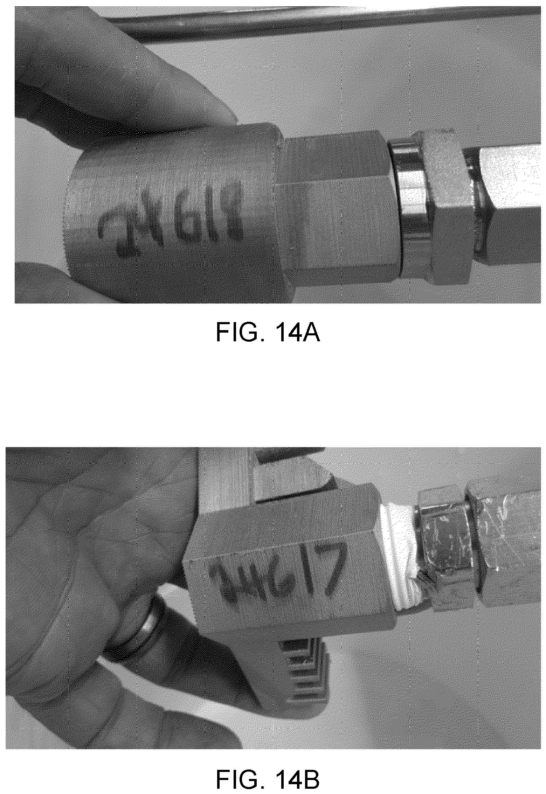

FIGS. 14A-14B illustrate parts printed from H13 tool steel and tested for leaks according to some embodiments of the present disclosure. FIG. 14A is an identical geometry to FIGS. 13A and 13B. FIG. 14B is an identical geometry to FIGS. 13C and 13D.

The features and advantages of this disclosure are apparent from the detailed specification, and thus, it is intended that the appended claims cover all systems and methods falling within the true spirit and scope of the disclosure. As used herein, the indefinite articles "a" and "an" mean "at least one" or "one or more." Similarly, the use of a plural term does not necessarily denote a plurality unless it is unambiguous in the given context. Words such as "and" or "or" mean "and/or" unless specifically directed otherwise. In this application, the terms "comprising" and "including" may be understood to encompass itemized components or steps whether presented by themselves or together with one or more additional components or steps. Unless otherwise stated, the terms "about" and "approximately" may be understood to permit standard variation as would be understood by those of ordinary skill in the art. Where ranges are provided herein, the endpoints are included. As used in this application, the term "comprise" and variations of the term, such as "comprising" and "comprises," are not intended to exclude other additives, components, integers or steps.

As used in this application, the terms "about" and "approximately" are used as equivalents. Any numerals used in this application with or without about/approximately are meant to cover any normal fluctuations appreciated by one of ordinary skill in the relevant art. In certain embodiments, the term "approximately" or "about" refers to a range of values that fall within 1% to 25% in either direction (i.e., greater than or less than) of the stated reference value, more specifically 25%, 20%, 19%, 18%, 17%, 16%, 15%, 14%, 13%, 12%, 11%, 10%, 9%, 8%, 7%, 6%, 5%, 4%, 3%, 2%, 1%, or less in either direction (i.e., greater than or less than) of the stated reference value unless otherwise stated or otherwise evident from the context (except where such number would exceed 100% of a possible value).

Many methodologies described herein include a step of "determining." Those of ordinary skill in the art, reading the present specification, will appreciate that such "determining" can utilize or be accomplished through use of any of a variety of techniques available to those skilled in the art, including for example specific techniques explicitly referred to herein. In some embodiments, determining involves manipulation of a physical sample. In some embodiments, determining involves consideration and/or manipulation of data or information, for example utilizing a computer or other processing unit adapted to perform a relevant analysis. In some embodiments, determining involves receiving relevant information and/or materials from a source. In some embodiments, determining involves comparing one or more features of a sample or entity to a comparable reference.

As used herein, the term "substantially," and grammatic equivalents, refer to the qualitative condition of exhibiting total or near-total extent or degree of a characteristic or property of interest. One of ordinary skill in the art will understand that chemical phenomena rarely, if ever, go to completion and/or proceed to completeness or achieve or avoid an absolute result.

### DETAILED DESCRIPTION

Among other things, the present disclosure provides systems and methods for additively manufacturing objects having or providing leak resistance. Various embodiments according to the present disclosure are described in detail herein. In particular, the present disclosure includes objects and their use in various applications, including, for example: leak tight or leak resistant parts and cooling channels in molds. Such cooling channels in molds, for example, can facilitate water cooled heat sinks, spot welding arms, and objects of a similar scope. The present disclosure envisions cooling channels in molds, for example that can be extended to encompass conformal cooling channels in tool steel molds and dies. Indeed, more broadly, the present disclosure encompasses a recognition that cooling channels, such as these, may be useful or desirable for any object fabricated by an additive manufacturing process where the object may include walls that are resistant to the flow of gas or liquids.

Additive manufacturing, sometimes more generally referred to as three-dimensional printing, refers to a class of technologies for the direct fabrication of physical products from a three-dimensional computer model by a layered manufacturing process. In contrast to material removal processes in traditional machining, the three-dimensional printing process adds material, using a layer-by-layer process to construct products. This process can enable the direct printing of products with extremely complex geometry.

Fused Deposition Modeling (FDM) also referred to as Fused Filament Fabrication (FFF) is an example of additive manufacturing technology used for modeling, production, and prototyping. In an FDM or FFF additive manufacturing process, a moving print head extrudes a filament of material onto a print bed or to an object being printed. The print head and/or the print bed can move in three dimensions relative to each other under computer control to define the printed object.

In a fused deposition additive manufacturing system, a three-dimensional part or model may be printed from a digital representation of the three-dimensional part in a layer-by-layer manner by extruding a flowable part material along toolpaths. The part material is extruded through an extrusion tip carried by a print head of a three-dimensional printing apparatus, device, or system. The part material is deposited as a sequence of roads on a substrate in a build plane. Extruded part material fuses to previously deposited part material and is then solidified.

The print head can move in two dimensions to deposit one horizontal plane or a layer of the object. Then, the print head or the print bed can be moved vertically by a small amount to begin another horizontal plane and a new layer of the object. Layer-by-layer object is formed. The position of the print head relative to the substrate is then incremented along one or more print axes, and the process can then be repeated to form an object, i.e., a three-dimensional part resembling the digital representation.

Additive manufacturing of an object, for example, a fused deposition additive manufacturing process, involves slicing a three-dimensional object into a plurality of two-dimensional layers that are stacked on top of one another (that is, for example, along the z-axis). In an additive manufacturing process, stacking typically may commence, for example at a build plate. Generally printing of the object is done layer-by-layer. A layer, for example, a first layer, is deposited (i.e., extruded) onto the build surface. That is, for example, a horizontal layer is printed with movement of the print head in the X-Y axis. Once this first horizontal layer is completed, a height adjustment is made in the Z-axis. Another horizontal layer of is printed with movement of the print head in the X-Y axis. Once the next horizontal layer is completed, another height adjustment is made in the Z-axis. This process continues, for each layer and layer-by-layer until the object is completed.

Additive manufacturing of a layer generally involves slicing a two-dimensional layer into a series of shells, that is, beads, lines, or shells. The printing of a layer is typically done shell-by-shell until the one or more shells (i.e., the plurality of shells) are complete. For example, each two-dimensional layer may have a number of shells lining a contour, such as a perimeter of a wall. The process of depositing or extruding shells is typically in a machine-controlled manner according to pre-determined slicing parameters. Additionally, printing of a subsequent shells may include extruding part material by tracing along a contour or path defined by a prior printed shell. A result of such a process can be a highly repeatable extrusion.

Moreover, each two-dimensional layer may have a different fill pattern filling the interior of the part. Additionally, a fill pattern may be deposited between an inner and an outer perimeter of a wall.

As provided herein, additive manufacturing processes can include slicing and forming layers and shells that are designed and configured to produce an object that is leak resistant. In some embodiments, the present disclosure includes forming shells and layers of an object having a perimeter wall that is designed and configured to provide leak resistance. In some aspects, an object can be designed and configured with multiple walls. In some aspects, each wall can be designed and configured with multiple perimeters. In some aspects, when a wall has at least an inner and an outer perimeter, an infill layer can be deposited therebetween. In some aspects, the present disclosure further includes forming multiple walls and/or forming multiple perimeters. In some aspects, the present disclosure further includes forming an infill layer between an inner and outer perimeter of a wall.

In some aspects, the present disclosure provides systems and methods for additively manufacturing objects having at least one wall or surface that is characterized by its leak resistance or being leak resistant. That is, a perimeter of the wall is such that a fluid or gas will not pass through, even under pressure. In some aspects, as used herein leak resistance includes, for example: gas tight, fluid tight, leak tight, liquid tight, watertight, gas proof, fluid proof, liquid proof, water proof, gas resistant, fluid resistant, liquid resistant, and water resistant, etc.

The present disclosure encompasses a recognition that prior additively manufactured objects made of metals or polymers could exhibit leakage. The leaks could be significant and repeatable such that they prevent using additive manufacturing objects and methods in applications where leakage is not tolerable.

For example, prior and/or known process for additively manufacturing shells and layers have been used to form walls of an object. Such objects have been made using slicing for layers and shells, for example, to form a metal container capable of being pressurized. Upon pressurization, the objects can exhibit fluid leakage at the wall locations.

The baseline slicing parameters for these leaky walls can lead to locally induced shell stresses and layer stresses. Such layer stresses and shell stresses, for example, can cause random point defects that are at least sizable enough to pass a fluid.

As such, these initial baseline deposition parameters are sometimes upgraded to include stress reducing patterns, including one of the following (A) or (B). (A) a first shell is printed in a clockwise direction; and a second shell is printed in a counterclockwise direction. During printing, for each contour or toolpath the print head alternates between clockwise and counterclockwise such that each toolpath or contour within the shell is printed with a different direction than its adjacent toolpaths. Alternating winding (i.e., clock handedness) directions for adjacent toolpaths in each shell, reduces part twists and deformations from embedded stresses. (B) a first shell is printed in a clockwise direction and then each shell on the same layer is also printed in the same clockwise direction. The next layer, a first shell is printed in a counterclockwise direction and then each shell on the same layer is also printed in the same counterclockwise direction. The alternating winding (i.e., clock handedness) directions across the layers offsets the stored torque during post-processing thereby reducing part twists and deformations from embedded stresses.

However, upon pressurization, the objects formed from these stress reduced parameters and patterns can still exhibit fluid leakage at the wall locations. It is notable that these geometries can enhance part quality and reduce part/object stress, but they do not, alone, provide leak resistance.

When compared with the slicing patterns that typically induce shell and layer stresses, leaks in objects formed from stress reduced parameters and patterns were slower, but still generally intolerable. Leaks in these stress reduced parts were also sometimes significant and repeatable. Leaks in these parts are such that they likely have prevented the use of additive manufacturing methods and objects formed as a result of these methods in applications where the fluid leakage of the result part is not tolerable.

Even the addition of more shells and/or layers of material to an object generally fails to eliminate leaks. For example, the addition of material typically does not result in leak resistance or noticeably slower leaks.

In addition, even an attempted combined effect of reduced stress and the addition of material typically does not result in slower leaks. When compared with the slicing patterns that induced shell and layer stresses, leaks are sometimes slower, but are likely still not tolerable.

The present disclosure encompasses a recognition that slicing parameters for creating shells and layers and for determining printing toolpaths and extrusion settings for FFF fabrication can result in a creation of wall voids which can lead to leakage. In some embodiments, the present disclosure provides slicing for shells and layers, for example, contours, toolpaths and extrusion printer settings, for FFF fabrication to avoid creation of through wall voids.

### Sealing of Shell-to-Shell Transitions

In some embodiments, the present disclosure includes continuously depositing a single shell to form a layer of an object. In some aspects, beads, lines, and shells are deposited, extruded or printed horizontally across a layer. Layers are printed layer-by-layer vertically by shifting or stepping in the z-axis. In some aspects, printing of a shell or a series of shells includes printing or extruding a deposition of material that does not jump, skip, or stagger. In some aspects, a continuous printing, extruding, or depositing is substantially continuous.

In some aspects, a continuous deposition or substantially continuous deposition is located at a transition between shells. For example, when forming a shell that lines a contour or perimeter of an object, a bead of printed material may be deposited or continuously deposited along that perimeter such that the bead exhibits no breaks or deviations. In some aspects, continuously depositing and/or substantially continuously depositing can include eliminating and/or substantially extending a leak path or possible leak path. Under prior printing processes, each layer was printed as a series of individual, separate, or unique paths. That is, the paths were not necessarily continuously connected.

FIGS. 1A-1B are a schematic representation illustrating a portion of a single layer 100. The layer shows series of shells for a wall of an object that is viewable from the z-axis. The illustration shows the series of shells specifically at a transition location for the series of shells. The transition location is the position or location at which the printer deviates, diverges, moves, shifts, transitions, or translates from a completed or printed shell to printing another shell.

FIG. 1A illustrates the above-described prior method of staggering from an inner shell (bottom) 110 to an outer shell (top) 120. That is, where each layer is printed as a series of separate paths that were not necessarily continuously connected. Under these conditions, a fluid could pass throughout the horizontal layer fairly unimpeded. The transition between each shell of the series of shells is depicted as a dotted line 130. The dotted line represents that the print head performed a non-extruding travel move at those transitions, i.e., staggered or skipped, during extruding or printing at those locations.

FIG. 1B illustrates substantially continuously depositing a transition 160. For example, when printing from an inner shell (bottom) 140 to an outer shell (top) 150, there is no period or substantially no period where there is non-extruding travel. On the X-Y plane, i.e., the horizontal layer, fluid flow is far more restricted. Specifically, to pass across the wall or perimeter of the surface, the fluid must enter and travel between the shells until it reaches an escape point. An opening and an exit for fluid flow, for example, are start and stop points for the print. By analogy, it is similar to trying to reach or leave a center of a maze. When there is a path directly cut through the side, it is an easier journey. When the maze follows a circuitous path, the journey is far more difficult. Additionally, as below explains when the travel is more and more constrained, the journey (i.e., the leak path) can be rendered impossible.

In some aspects, the present disclosure includes continuously depositing or substantially continuously depositing contours or toolpaths by angling a transition between shells. In some aspects, the present disclosure includes continuously depositing or substantially continuously depositing a contour or toolpath. Deviating from the toolpath to a transition where deviating includes diverging from the toolpath at an angle of less than about 90°. Returning to the contour or toolpath such that the subsequent shell is approximately adjacent to the prior shell. Returning to the contour or toolpath such that the subsequent shell is tracing the contour of the prior shell.

FIGS. 2A-2B illustrate a schematic representation of a layer of an object 200. The schematic representation shows a series of shells at a perimeter and specifically at a transition location for the series of shells. FIG. 2A illustrates substantially continuously depositing a transition by deviating from a toolpath including diverging at an angle of about 90° 210. FIG. 2B illustrates substantially continuously depositing a transition by deviating from a toolpath including diverging at an angle of less than about 90° 220.

In some aspects, continuously depositing a toolpath includes depositing in a spiraling inward or outward manner. In some aspects, an exposed edge, for example, may be machined smooth or otherwise manipulated by post-additive manufacturing processes.

In some aspects, the present disclosure includes continuously depositing or substantially continuously depositing contours or toolpaths by angling the transition between the shells while substantially narrowing a potential path of fluid travel. In some aspects, the present disclosure includes continuously depositing toolpaths or substantially continuously depositing a transition by deviating from a toolpath, where deviating includes diverging from the toolpath at an angle of less than about 90° and where there is locally an increased extrusion at these shell transitions.

FIGS. 3A-3B illustrate a schematic representation of a layer of an object 300. The schematic representation shows a series of shells at a perimeter and specifically at a transition location for the series of shells. FIG. 3A illustrates substantially continuously depositing a transition by deviating from a toolpath, where deviating includes diverging from the toolpath at an angle of less than about 90° 310. FIG. 3B, in addition to deviating from a toolpath, where deviating includes diverging from the toolpath at an angle of less than about 90° 320, illustrates substantially continuously depositing by an increased extrusion 330. As illustrated in FIG. 3B, the increased extrusion provides an improved or enhanced packing at the transitions of the shells. That is, a seam aligning or partially aligning shell transitions may have an increased part material volume relative to a bead, contour, standard extrusion, or toolpath. Without wishing to be bound by any particular theory, it is believed that the narrowing at this junction results in a more constricted path and makes it more difficult or challenging for fluid to travel through the shells.

FIGA. 4A-4B illustrate a schematic representation of a portion of a wall (single perimeter) of an object 400. As explained above, FIG. 4A illustrates four shells horizontally across a bottom layer 410 and another three printed layers above the bottom layer, each having four shells horizontally across (e.g., along the z-axis, i.e., vertically), 415, 420, and 425 respectively. Each shell of layer 415, 420, and 425 is shown formed about centrally above a shell of a prior layer and the shell being under approximately a same level of compression as that of the shell of the prior layer. 430 highlights a gap(s) that can form within shells. These gaps can result from extrusion or printing conditions and thus can be patterned and/or repeatable. FIG. 4B illustrates substantially continuously depositing each shell at a location approximately centrally above (e.g., along the z-axis, i.e., vertically) a boundary between shells of a prior layer. Specifically, FIG. 4B illustrates three shells horizontally across a bottom layer 435 with four shells printed across layer 440. FIG. 4B further illustrates an additional three shells printed across layer 445 followed by four shells printed across layer 450. 455 highlights that centrally positioning a bead between the printed bead of the prior layer can effectively seal shell gaps. Sealing of shell gaps can close off a horizontal (and/or a vertical) fluid path within a printed structure.

FIGS. 5A-5B illustrate a schematic representation of a portion of a wall (as illustrated, a single perimeter) of an object 500. FIG. 5A illustrates four shells horizontally across a bottom layer 510 and another three printed layers above the bottom layer, each having four shells horizontally across (e.g., along the z-axis, i.e., vertically), 515, 520, and 525 respectively. Each shell of layer 515, 520, and 525 is shown as formed about centrally above a shell of a prior layer and the shell being under approximately a same compression force as that of the shell of the prior layer. 530 highlights a gap(s) that can occur within shells. These gaps can result from extrusion or printing conditions and thus can be patterned and/or repeatable. FIG. 5B illustrates substantially continuously depositing each shell at a location approximately centrally above (e.g., along the z-axis, i.e., vertically) a boundary between shells of a prior layer. Specifically, FIG. 5B illustrates four shells horizontally across a bottom layer 535 with three shells printed with increased compression (or over-extrusion) such that the shells are wider and have an increased volume of part material disposed horizontally across layer 540. Additionally, each of the three shells of layer 540 are centrally formed between two shells of prior layer 535. Another four shells are printed horizontally across a layer 545 followed by three shells printed with increased compression or over-extrusion such that the shells are wider and have an increased volume of part material disposed horizontally across layer 550. For layer 550 (in the same manner as layer 540), each of the three shells of layer 550 are centrally formed between two shells of prior layer 545. 555 highlights that compression, over-extrusion, or the approximately central positioning of a bead (or a combination of these) between the printed bead of the prior layer can effectively seal shell gaps as highlighted. Sealing of shell gaps can close off a horizontal (and/or a vertical) fluid path within a printed structure.

FIG. 6 illustrates a schematic representation of a portion of a wall (as illustrated, a single perimeter) of an object 600. FIG. 6 illustrates four shells horizontally, 650-680, respectively across a bottom layer 610. The bead printed on layer 610 at shell position 650 and shell position 670 is a single height bead. The bead printed on layer 610 at shell position 660 and shell position 680 is a double height bead. At layer 620 a double height bead is printed at locations 650 and 670. At layer 630 a double height bead is printed at locations 660 and 680. At layer 640 a double height bead is printed at locations 650 and 670. In some aspects, the present disclosure includes alternating double height bead for shells of a layer. 690 highlights that a double height bead of extrusion spanning shells of two printed layers can effectively seal shell gaps as highlighted. Sealing of shell gaps can close off a horizontal (and/or a vertical) fluid path within a printed structure. In some aspects, compression, over-extrusion, double height shells, etc. can work to compensate for repeating or patterned gaps.

### Alternating Shell Layer-by-Layer for Sealing and Isolating Defects

In some embodiments, the present disclosure includes changing a number of shells per layer to avoid an alignment of defects or gaps that may exist between shells. Changing a number of shells per layer can disrupt vertical leak paths within a printed part. In some aspects, the present disclosure includes periodically alternating a number of shells for each layer, i.e., regularly changing a number of shells per layer can disrupt such a pattern of a vertical leak path, defect or gap. Regularly or periodically changing a number of shells per layer can increase sealing and enhance leak resistance. In some aspects, the present disclosure includes periodically alternating a same number of shells for every two layers. In some aspects, forming additional layers comprises periodically alternating a same number of shells for every three layers, for every four layers, or for every five layers, i.e., regularly changing a number of shells, such that there is mechanical stability with the disruption.

Changing a number of shells or periodically alternating a number of shells may avoid alignment of an infill defect located adjacent to a shell in prior formed layers from repeating in subsequently formed layers. That is, periodically varying the number of shells per layer may avoid consistent alignment of defects that form (i.e., tend to form) adjacent to the shells at the infill (e.g., between the shells and fill), which could make a vertical leak path. FIG. 7 illustrates a schematic representation of a portion of a wall (as illustrated a single perimeter extending into an infill) of an object 700. FIG. 7 illustrates two layers of horizontal shells 710 with each layer including six shells per layer. Disposed above layer 710, are two additional layers of horizontal shells 720 with each layer including four shells per layer. Disposed above layer 720 are two additional layers of horizontal shells 730 with each layer including six shells per layer. FIG. 7 illustrates infill layers 740 corresponding to shells 710; infill layers 750 corresponding to shells 720; and infill layers 760 corresponding to shells 730. As shown, periodically varying a number of shells per layer avoids consistent alignment of infill defect 770 that is aligned at the infill adjacent to the shells, between the shells and fill. Without wishing to be bound by any particular theory, it is believed that alternating shells could eliminate a potential vertical leak path. Additionally, a periodically repeating pattern that eliminate leak paths, for example may be chosen because it aligns with, is compatible with, comports with another sealing scheme, as above provided. Alternatively, a periodically repeating pattern that eliminates leak paths, for example, may be chosen because it aligns with, is compatible with, comports with another scheme, such as one that reduces resultant object stress.

### Offsetting Shell Transition Alignment Layer-by-Layer for Sealing

FIGS. 8A-8B illustrate a schematic representation of a portion of a wall (as illustrated a single perimeter) of an object. FIG. 8A illustrates substantially continuously depositing each shell with a transition between shells. FIG. 8A specifically illustrates four layers of vertical shells 810, 815, 820, and 825 and a shell transition for each layer shown as a gap in the layer. Alignment of the shell transitions and gaps forms a seam 850 within the object. FIG. 8A further illustrates shell transitions being substantially aligned above each other (e.g., along the z-axis, i.e., vertically), thereby forming an aligned seam. The aligned seam 850 is a potential fluid travel path, i.e., a leak path.

FIG. 8B illustrates these transitions being vertically staggered relative to one another above/below (e.g., along the z-axis, i.e., vertically) through the wall, thereby forming a varied seam. FIG. 8B illustrates four layers of vertical shells 830, 835, 840, and 845 and an overlapping portion, forming an offsetting portion, leading to a varied seam 860. The overlapping portion, offsetting portion, and the varied seam 860 can result from a shell transition if one layer does not align with other shell transitions of other layers. That is, the shell transitions are offset and do not align, for example, because the shell transition for one of the layers overlaps portion of another layer. The varied seam 860 creates a less direct, i.e., more convoluted, fluid travel path leading and more likely leading to leak resistance. FIG. 8B highlights an overlapping portion 870.

FIGS. 9A-9B illustrate photographs of outside surfaces of a portion of a wall of an object 900. FIG. 9A shows the outside surface of the wall when fabricated using a process forming an aligned seam, which is visible at 910. FIG. 9B shows the outside surface of the wall when fabricated using a process forming a varied seam.

### Materials

Suitable materials for printing leak resistant shells and layers may include, for example, polymer-based composites, metals, and combinations thereof.

Composite materials may include core and matrix materials. Matrix materials may include, for example, acrylonitrile-butadiene-styrene (ABS) terpolymer, epoxy or vinyl ester prepolymer, nylon/polyamide, polyetherimide (PEI), poly(ether ether ketone) (PEEK), poly(lactic acid) (PLA), or liquid crystal polyester (LCP). The core or strands of the core may reinforce structurally, conductively (electrically and/or thermally), insulatively (electrically and/or thermally), optically and/or in a manner to provide fluidic transport, such as carbon fibers, aramid fibers, high strength nylon fiber, or fiberglass.

Commercially valuable metals suitable for printing include aluminum, copper, steel, stainless steel, titanium and/or alloys as well as other metals resistant to oxidation at both high and low temperatures (e.g., amorphous metal, glassy metal, or metallic glass). For example, suitable metals for printing leak-resistant shells and layers may include, but not limited to, copper, tool steels, e.g., H13, A2, and D2, stainless steels, e.g., 17-4PH, metal alloys, e.g., INCONEL® 625, among other metals.

Indeed, the present disclosure encompasses a recognition that applications for any printable materials, both polymer composites and metals could benefit from leak resistance.

An infill, no matter its location in a printed part, may be any material, a same material or different material from that of shells and layers. An infill pattern can be any pattern, including, for example, solid or patterned, such as honeycomb.

In some aspects, beads, shells, and other printed deposits are extruded physically larger, e.g., of a greater volume of part material, than a typical extrusion; this is known as over-extrusion. In some aspects, beads or shells are extruded at a percentage greater than typical extrusion parameters. In some aspects, beads or shells are extruded about 1% greater than typical, about 2% greater, about 3% greater, about 4% greater, about 5% greater, about 6% greater, about 7% greater, about 8% greater, about 9% greater, about 10% greater, about 11% greater, about 12% greater, about 13% greater, about 14% greater, about 15% greater, about 20% greater, about 25% greater, about 30% greater, about 35% greater, about 40% greater, about 45% greater, about 50% greater, about 55% greater, about 60% greater, about 65% greater, about 70% greater, about 75% greater, about 80% greater, about 85% greater, about 90% greater, about 95% greater, or about 100% greater.

In some aspects, over-extrusion may be used in a strategic manner to form different components of the same finished parts. For example, in some aspects where over-extrusion is utilized to form parts, forming walls may have a different amount of over-extrusion than the depositing of infill. In some non-limiting aspects, forming walls may utilize about 1% to about 20% over-extrusion over a typical deposition, e.g., about 1% over-extrusion, about 2% over-extrusion, about 3% over-extrusion, about 4% over-extrusion, about 5% over-extrusion, about 6% over-extrusion, about 7% over-extrusion, about 8% over-extrusion, about 9% over-extrusion, about 10% over-extrusion, about 11% over-extrusion, about 12% over-extrusion, about 13% over-extrusion, about 14% over-extrusion, about 15% over-extrusion, about 16% over-extrusion, about 17% over-extrusion, about 18% over-extrusion, about 19% over-extrusion, or about 20% over-extrusion. In some non-limiting aspects, forming infill may utilize about 1% to about 30% over-extrusion over a typical deposition, e.g., about 1% over-extrusion, about 2% over-extrusion, about 3% over-extrusion, about 4% over-extrusion, about 5% over-extrusion, about 6% over-extrusion, about 7% over-extrusion, about 8% over-extrusion, about 9% over-extrusion, about 10% over-extrusion, about 11% over-extrusion, about 12% over-extrusion, about 13% over-extrusion, about 14% over-extrusion, about 15% over-extrusion, about 16% over-extrusion, about 17% over-extrusion, about 18% over-extrusion, about 19% over-extrusion, about 20% over-extrusion, about 21% over-extrusion, about 22% over-extrusion, about 23% over-extrusion, about 24% over-extrusion, about 25% over-extrusion, about 26% over-extrusion, about 27% over-extrusion, about 28% over-extrusion, about 29% over-extrusion, or 30% over-extrusion.

Without wishing to be bound by any particular theory, deposited materials, i.e., metal particles arranged in shells and layers, generally sinter as deposited. Thus, under certain circumstances, a part that is printed with an insufficient amount of part material may have gaps present in the pre-sintered or green body part that remain upon sintering, resulting in a leak. In contrast, a part formed by the over-extrusion of part material may result in the deposition of a greater amount than necessary, causing the part material to leak of the of the part as it sinters to create a part larger than the listed specification. In either scenario, a defect formed either under- or over-extrusion may carry over into the finished parts reducing part quality. In some aspects, the amount of over-extrusions is controlled such that a balance is struck between depositing a sufficient amount of material to reduce leakage and not depositing more material than necessary.

As noted herein, a defect present in a finished part may present or compound as a surface defect and increase the surface roughness of a finished part. In some aspects, the part may be printed by the selective use of over-extrusion in areas of the part where leak-resistance is needed. For example, in some aspects, over extrusion may be used on certain layers, e.g., an inner layer or inner shell, of a part to aid in providing leak-resistance with the remainder of the part printed under typical printing condition. The selective use of over-extrusion reduces the likelihood of a defect propagating to other printed areas of a part. This is only one aspect of the selective use of over-extrusion, and the invention is not limited in this regard. It is envisioned that other over-extrusion strategies for forming leak-resistant parts are within the scope of this disclosure.

In some cases, over-extrusion-induced defects may be reduced by providing for dimensional control of the position of the printing nozzle or print head. Dimensional control of the nozzle position should be considered as the parts printed using over-extrusion are, prior to sintering, larger than the specification may call for. In order to compensate for the increased size of parts printed in this manner, the offset of the print head or print nozzle may be adjusted in the appropriate direction. The offset of the print head or print nozzle may aid in preserving tolerances of ±0.5 mm (±.02") for parts less than 60 mm (2.36") and ±1.0% for parts 60-90 mm (2.36-3.54") as measured using a suitable measurement device (e.g., mechanical or optical measurement, i.e., a laser).

In some aspects, strategically not compensating for leak resistance, i.e., selectively over-extruding part material for form a part, aids in producing a finished part having a desirable surface roughness, as measured in µm Ra, within acceptable tolerances.

### ENUMERATED EMBODIMENTS

The invention is further described with reference to the following enumerated embodiments.
1. A method for additively manufacturing an object having a wall, comprising steps of:
   forming a base layer of the wall, comprising:
   substantially continuously depositing a composition along a contour to form a shell of one or more shells,
   forming subsequent shells of the one or more shells from the substantially continuously deposited composition along neighboring paths to the contour,
   prior to the step of forming the subsequent shells, between each shell of the subsequent shells of the one or more shells, substantially continuously depositing a transition therebetween; and
   layer-by-layer forming additional layers to form the wall of the object.
2. The method of embodiment 1, further comprising forming a multi-perimeter wall, comprising steps of:
   prior to forming additional layers, staggering the contour from a first perimeter location to a second perimeter location;
   forming the layer of the wall at the second perimeter location; and
   layer-by-layer forming additional layers of the wall to form the multi-perimeter wall of the object.
3. The method of any of the previous embodiments, further comprising offsetting the staggered contour such that each subsequent layer of the additional layers overlaps the transitions therebetween the shells of the one or more shells.
4. The method of any of the previous embodiments, further comprising forming an infill between the perimeters of the walls of the object.
5. The method of any of the previous embodiments, wherein the step of substantially continuously depositing a transition therebetween comprises forming an unbroken connection between each shell of the one or more shells.
6. The method of any of the previous embodiments, wherein the wall is characterized by its resistant to fluid flow.
7. The method of any of the previous embodiments, wherein when the object is pressurized with a gas, the wall holds pressure.
8. The method of any of the previous embodiments, wherein when the object is pressurized with a gas, the wall is resistant to leaks.
9. The method of any of the previous embodiments, wherein the wall holds pressure in a pressure range between about 20 psi and about 80 psi.
10. The method of any of the previous embodiments, wherein the step of substantially continuously depositing a transition therebetween, further comprises angling the transition.
11. The method of any of the previous embodiments, wherein the step of angling the transition, comprises deviating from a trajectory of a toolpath at an angle of about less than about 90°.
12. The method of any of the previous embodiments, wherein the step of substantially continuously depositing a transition therebetween, further comprises increasing a volume of the deposit at the transition.
13. The method of any of the previous embodiments, wherein the step of increasing comprises at least about a 5% increase.
14. The method of any of the previous embodiments, wherein the step of increasing comprises at least about a 10% increase.
15. The method of any of the previous embodiments, wherein the step of increasing comprises a 5x increase.
16. The method of any of the previous embodiments, wherein the step of increasing comprises a 10x increase.
17. The method of any of the previous embodiments, wherein the step of layer-by-layer forming additional layers comprises, for each layer, forming a different number of shells from the immediate prior layer.
18. The method of any of the previous embodiments, wherein the step of layer-by-layer forming additional layers comprises, periodically alternating a number of shells for each layer.
19. The method of any of the previous embodiments, wherein the step of layer-by-layer forming additional layers comprises, periodically alternating a same number of shells for every two layers.
20. The method of any of the previous embodiments, wherein the step of layer-by-layer forming additional layers comprises, periodically alternating a same number of shells for every three layers.
21. The method of any of the previous embodiments, wherein the step of layer-by-layer forming additional layers comprises, periodically alternating a same number of shells for every four layers.
22. The method of any of the previous embodiments, wherein the step of layer-by-layer forming additional layers comprises, periodically alternating a same number of shells for every five layers.
23. The method of any of the previous embodiments, wherein the step of periodically alternating isolates an infill defect located adjacent to a shell in prior formed layers or subsequently formed layers.
24. The method of any of the previous embodiments, wherein the step of layer-by-layer forming additional layers comprises, prior to the step of substantially continuously depositing the composition, centrally aligning a shell above a transition therebetween shells of an immediate prior layer.
25. The method of any of the previous embodiments, wherein the step of layer-by-layer forming additional layers comprises, prior to the step of substantially continuously depositing the composition, centrally aligning a shell above a transition therebetween shells of an immediate prior layer, and increasing a volume of layer extrusion, thereby forming an over-extruded layer.
26. The method of any of the previous embodiments, wherein the step of layer-by-layer forming additional layers comprises, periodically alternating between the base layer and the over-extruded layer.
27. The method of any of the previous embodiments, wherein the step of substantially continuously depositing the composition for at least one shell of the one or more shells, comprises over extruding deposition for each shell layer.
28. The method of any of the previous embodiments, wherein the step of forming subsequent shells, each subsequent shell approximately follows an adjacent contour of each prior shell.
29. The method of any of the previous embodiments, wherein the step of forming each subsequent shell comprises deviating from the contour to form the transition.
30. The method of any of the previous embodiments, wherein the step of deviating comprises diverging from the prior toolpath.
31. The method of any of the previous embodiments, wherein the step of deviating comprises diverging from the prior toolpath at an angle of less than 90°.
32. The method of any of the previous embodiments, the step of forming subsequent shells of the one or more shells, comprises after the step of deviating, aligning the neighboring path to the contour adjacent to the prior contour; and tracing the prior contour.
33. The method of any of the previous embodiments, further comprising overlapping a portion of the contour of each shell of the one or more shells such that the transition therebetween and the subsequent shells of the one or more shells are offset relative to those of a prior shell.
34. The method of any of the previous embodiments, wherein the step of forming the infill comprises depositing infill.
35. The method of any of the previous embodiments, wherein the step of forming the infill comprises extruding infill.
36. The method of any of the previous embodiments, wherein the infill comprises a same material as a shell material.
37. The method of any of the previous embodiments, wherein the step of forming the infill comprises depositing a honeycomb infill.
38. The method of embodiment 1, wherein the wall is a multi-perimeter wall, the method further comprising steps of: prior to the step of forming additional layers, staggering the contour from a first perimeter location to a second perimeter location; forming an additional layer of the wall at the second perimeter location; and layer-by-layer, at the first perimeter location and the second perimeter location, forming additional layers of the wall to form the multi-perimeter wall of the object.
39. The method of embodiment 38, further comprising offsetting the staggered contour such that each subsequent layer of the additional layers overlaps the transitions therebetween the shells of the one or more shells.
40. The method of embodiment 38 or 39, further comprising forming an infill between the first perimeter and second perimeter of the walls of the object
41. The method of any previous embodiment, wherein the step of substantially continuously depositing a transition therebetween comprises:
   forming an unbroken connection between each shell of the one or more shells; angling the transition, optionally wherein angling comprises deviating from a trajectory of a toolpath at an angle of about less than about 90°;
   increasing a volume of the deposit at the transition; or
   over extruding deposition for each shell layer of at least one shell of the one or more shells.
42. The method of any previous embodiment, wherein the wall is characterized by its resistance to fluid flow.
43. The method of any previous embodiment, wherein when the object is pressurized with a gas:
   the wall is configured to hold pressure;
   the wall is configured to be resistant to leaks; or
   the wall is configured to hold pressure in a pressure range between about 20 psi and about 80 psi.
44. The method of embodiment 41 or any embodiment dependent from embodiment 41, wherein the step of increasing comprises:
   increasing by at least 5%;
   increasing by at least 10%;
   increasing by at least 5x; or
   increasing by at least 10x.
45. The method of any previous embodiment, wherein the step of layer-by-layer forming additional layers comprises:
   for each layer, forming a different number of shells from the immediate prior layer;
   periodically alternating a number of shells for each layer;
   periodically alternating a same number of shells for every two layers;
   periodically alternating a same number of shells for every three layers;
   periodically alternating a same number of shells for every four layers;
   periodically alternating a same number of shells for every two layers; or
   periodically alternating between the base layer and the over-extruded layer,
   optionally wherein the step of periodically alternating any number of shells isolates an infill defect located adjacent to a shell in prior formed layers or subsequently formed layers.
46. The method of any previous embodiment, wherein the step of layer-by-layer forming additional layers comprises, prior to the step of substantially continuously depositing the composition,
   centrally aligning a shell above a transition therebetween shells of an immediate prior layer; or
   centrally aligning a shell above a transition therebetween shells of an immediate prior layer, and increasing a volume of layer extrusion, thereby forming an over-extruded layer.
47. The method of any previous embodiment, wherein the step of forming each subsequent shell comprises:
   approximately following an adjacent contour of each prior shell; or
   deviating from the contour to form the transition, optionally wherein the step of deviating comprises:
      diverging from the prior toolpath; or
      diverging from the prior toolpath at an angle of less than 90°.
48. The method of any previous embodiment, further comprising overlapping a portion of the contour of each shell of the one or more shells such that the transition therebetween and the subsequent shells of the one or more shells are offset relative to those of a prior shell.
49. The method of embodiment 4 or any embodiment dependent from embodiment 4, wherein the step of forming the infill comprises:
   depositing infill;
   extruding infill; or
   depositing a honeycomb infill.
50. The method of embodiment 49, wherein the infill comprises a same material as a shell material or a different material than a shell material.

### Examples

The following examples illustrate some embodiments and aspects of the disclosure. It will be apparent to those skilled in the relevant art that various modifications, additions, substitutions, and the like can be performed without altering the spirit or scope of the disclosure, and such modifications and variations are encompassed within the scope of the disclosure as defined in the claims which follow. The following examples do not in any way limit the disclosure.

### Example 1

Example 1 describes a method of forming a leak resistant object.

### Materials and Methods

Samples were printed using a Markforged Metal X extruding a filament including a copper composite.

FIG. 10 illustrates a schematic representation of a printed object 1020, showing 1/2" NPT threads for direct coupling to an m-type air fitting 1010 for connection of the test setup.

Pressure was tested using clean dry air at 50 psi. Pressures were applied in excess of 5 minutes. FIG. 11 is a photograph showing the compressed air testing of a baseline part. As illustrated, the baseline part has bubbles emanating from the part, indicating that the layers of part material have gaps therebetween and are not fully sealed.

Objects were also additively manufactured using pathing as disclosed above, for example, the substantially continuous depositing of shells, the inclusion of printing beads that are 10% greater in dimension than typical printed beads, the printing of shells having a greater volume of part material at seams, and/or the periodic alternating of a number of shells across layers, e.g., in a 4-4-6-6 pattern and filled by a solid infill). As is noted throughout, multiple schemes may be used together to achieve leak resistance.

FIG. 12 is a photograph showing the part made as described in the prior paragraph. The part is shown holding 50 psi for greater than 5 minutes without showing evidence of a leak, indicating that the pathing techniques described above (e.g., continuous printing or over-extrusions) can be successful in creating a leak resistant part.

### Example 2

Example 2 describes a method of forming leak resistant objects of a controlled surface finish.

### Materials and Methods

Samples were printed using a Markforged Metal X extruding metal powder filaments. Filaments included 17-4PH stainless steel and H13 tool steel. Surface finish of printed parts was measured with a surface profilometer in the Z-direction (Mitutoyo). Parts were printed having walls with a periodic variation in the number of deposited shells per layer. Example patterns included 4 layers with a 2-1-4-3 number of shells per layer and 6 layers with a 2-1-6-5-4-3 number of shells per layer. In both printed parts, interior shells 2 and 1 were not printed using either continuous pathing or over-extrusion; and as a result, by not using these print methods enhanced the surface finish was enhanced and surface roughness was reduced. Table 1 lists the requirements for parts printed using the methods of this example

**Table 1. Printed part specifications**

| **Property** | **Requirement** |
|---|---|
| Leak Resistance | No leaks or bubbles under constant pressure of 50 PSI held for 5 minutes |
| Surface Finish (Z direction) | 10-15 µm Ra (average) |

FIGS. 13A-13D and 14A-14B illustrate finished parts of two different geometries printed using different materials. Specifically, FIGS. 13A-13D illustrate parts printed from 17-4PH stainless steel, with FIGS. 13A and 13B illustrating a part geometry with less fine structure and FIGS. 13C and 13D illustrating a part geometry with different types of fine structural elements. FIGS. 14A illustrate parts printed from H13 tool steel with the part in FIG. 14A having the same geometry as illustrated in FIGS. 13A-13B and the part illustrated in FIG. 14B having the same geometry as the part illustrated in FIGS. 13C-13D. As is illustrated in FIGS. 13A-13D and 14A-14B, none of the printed parts exhibited the formation of bubbles when pressurized under water, indicating that the printing process using the aforementioned shell patterns with either continuous printing or over-extrusions resulted in leak-free final parts.

Another metric used to evaluate printed parts printed using the shell pattern as described in this Example is the surface finish. For the printed parts to be considered acceptable, as noted in Table 1, the finished pasts should have an average surface finish in the Z-direction, as measured by a profilometer, of 10-15 µm Ra. As shown in Table 2, each of the parts illustrated in FIGS. 13C, 13D, and 14B had a surface roughness of between 12.7-13.5 µm Ra, well within the acceptable range.

**Table 2. Resulting surface finish of printed parts**

| **Figure Reference** | **Material** | **Surface Roughness (µm Ra)** |
|---|---|---|
| FIG. 13C | 17-4PH | 12.7 |
| FIG. 13D | 17-4PH | 13.5 |
| FIG. 14B | H13 | 13.5 |

### OTHER EMBODIMENTS AND EQUIVALENTS

While the present disclosure has explicitly discussed certain particular embodiments and examples of the present disclosure, those skilled in the art will appreciate that the disclosure is not intended to be limited to such embodiments or examples. On the contrary, the present disclosure encompasses various alternatives, modifications, and equivalents of such particular embodiments and/or example, as will be appreciated by those of skill in the art.

Accordingly, for example, methods and diagrams of should not be read as limited to a particular described order or arrangement of steps or elements unless explicitly stated or clearly required from context (e.g., otherwise inoperable). Furthermore, different features of particular elements that may be exemplified in different embodiments may be combined with one another in some embodiments.

## Claims

1. A method for additively manufacturing an object having a wall, comprising steps of:
forming a base layer of the wall, comprising:
substantially continuously depositing a composition along a contour to form a shell of one or more shells,
forming subsequent shells of the one or more shells from the substantially continuously deposited composition along neighboring paths to the contour, and
prior to the step of forming the subsequent shells, between each shell of the subsequent shells of the one or more shells, substantially continuously depositing a transition therebetween; and
layer-by-layer forming additional layers to form the wall of the object.

2. The method of claim 1, wherein the wall is a multi-perimeter wall, the method further comprising steps of:
prior to the step of forming additional layers, staggering the contour from a first perimeter location to a second perimeter location;
forming an additional layer of the wall at the second perimeter location; and
layer-by-layer, at the first perimeter location and the second perimeter location, forming additional layers of the wall to form the multi-perimeter wall of the object.

3. The method of claim 2, further comprising offsetting the staggered contour such that each subsequent layer of the additional layers overlaps the transitions therebetween the shells of the one or more shells.

4. The method of claim 2 or 3, further comprising forming an infill between the first perimeter and second perimeter of the wall of the object.

5. The method of any of the previous claims, wherein the step of substantially continuously depositing a transition therebetween comprises:
forming an unbroken connection between each shell of the one or more shells;
angling the transition, optionally wherein angling comprises deviating from a trajectory of a toolpath at an angle of less than about 90°;
increasing a volume of the deposit at the transition; or
over extruding deposition for each shell layer of at least one shell of the one or more shells.

6. The method of any of the previous claims, wherein the wall is **characterized by** its resistance to fluid flow.

7. The method of any of the previous claims, wherein when the object is pressurized with a gas:
the wall is configured to hold pressure;
the wall is configured to be resistant to leaks; or
the wall is configured to hold pressure in a pressure range between about 20 psi and about 80 psi.

8. The method of claim 5 or any claim dependent on claim 5, wherein the step of increasing comprises:
increasing by at least 5%;
increasing by at least 10%;
increasing by at least a 5x; or
increasing by at least 10x.

9. The method of any of the previous claims, wherein the step of layer-by-layer forming additional layers comprises:
for each layer, forming a different number of shells from the immediate prior layer;
periodically alternating a number of shells for each layer;
periodically alternating a same number of shells for every two layers;
periodically alternating a same number of shells for every three layers;
periodically alternating a same number of shells for every four layers;
periodically alternating a same number of shells for every two layers; or
periodically alternating between the base layer and the over-extruded layer,
optionally wherein the step of periodically alternating any number of shells isolates an infill defect located adjacent to a shell in prior formed layers or subsequently formed layers.

10. The method of any of the previous claims, wherein the step of layer-by-layer forming additional layers comprises, prior to the step of substantially continuously depositing the composition,
centrally aligning a shell above a transition therebetween shells of an immediate prior layer; or
centrally aligning a shell above a transition therebetween shells of an immediate prior layer, and increasing a volume of layer extrusion, thereby forming an over-extruded layer.

11. The method of any of the previous claims, wherein the step of forming each subsequent shell comprises:
approximately following an adjacent contour of each prior shell; or
deviating from the contour to form the transition, optionally wherein the step of deviating comprises:
diverging from the prior toolpath; or
diverging from the prior toolpath at an angle of less than 90°.

12. The method of any of the previous claims, wherein the step of forming subsequent shells of the one or more shells, comprises after the step of deviating, aligning the neighboring path to the contour adjacent to the prior contour; and tracing the prior contour.

13. The method of any of the previous claims, further comprising overlapping a portion of the contour of each shell of the one or more shells such that the transition therebetween and the subsequent shells of the one or more shells are offset relative to those of a prior shell.

14. The method of claim 4 or any claim dependent on claim 4, wherein the step of forming the infill comprises:
depositing infill;
extruding infill; or
depositing a honeycomb infill.

15. The method of claim 14, wherein the infill comprises a same material as a shell material or a different material than a shell material.
